# EUROPEAN PATENT APPLICATION

(11) **EP 4 675 743 A1**
(43) Date of publication of application: **07.01.2026**
(21) Application number: 24803611.3
(22) Date of filing: 16.04.2024
(51) Int. Cl.: H01M 10/058, H01M 10/0562, H01M 4/66, H01M 4/525, H01M 10/0568, H01M 10/0569, H01M 4/02

(54) **NEGATIVE ELECTRODE FOR LITHIUM-FREE SECONDARY BATTERY, AND LITHIUM-FREE SECONDARY BATTERY COMPRISING SAME**

(30) Priority: 09.05.2023 KR 20230059726
(71) Applicant: LG Energy Solution, Ltd., Seoul 07335 (KR); Korea Advanced Institute of Science and Technology, Daejeon 34141 (KR)
(72) Inventor: KIM, Hee-Tak, Daejeon 34141 (KR); OH, Wonsik, Daejeon 34141 (KR); KWON, Hyeokjin, Daejeon 34141 (KR)
(74) Representative: Goddar, Heinz J.
(86) International application number: PCT/KR2024/005055
(87) International publication number: WO 2024/232556

(57) **Abstract**

The present disclosure relates to a negative electrode for lithium-free secondary battery and a lithium-free secondary battery comprising the same, which suppress side reactions between the electrolyte and the lithium metal layer electrodeposited on the negative electrode during charging and discharging and thus can improve the efficiency and life characteristics of a lithium-free secondary battery.

## Description

### [TECHNICAL FIELD]

### Cross Citation with Related Application(s)

This application claims the benefit of Korean Patent Application No. 10-2023-0059726 filed on May 9, 2023 in the Korean Intellectual Property Office, the disclosure of which is incorporated herein by reference in its entirety.

The present disclosure relates to a negative electrode for lithium-free secondary battery and a lithium-free secondary battery comprising the same, which can improve the efficiency and life characteristics of a lithium-free secondary battery.

### [BACKGROUND]

Lithium metal batteries are batteries that apply a negative electrode active material made of lithium metal (Li-metal), and have the advantage of having a theoretically very high energy density and capacity compared to conventionally used batteries that apply graphite-based or lithium alloy-based negative electrode. Therefore, research and development of such lithium metal batteries continue in order to apply them to batteries requiring high energy density.

However, lithium metal batteries have disadvantages in that in a charge and discharge process, the volume change of the negative electrode is large, a needle-like lithium metal layer (lithium dendrite, etc.) grows, and due to the characteristic of the lithium metal having high reactivity, side reactions between the lithium metal layer and the electrolyte are generated, resulting in a large irreversible capacity. As a result, the lithium metal battery been properly commercialized because the possibility of short circuit of the electrodes is high, and the stability and life characteristics are not sufficient.

Recently, as an alternative to the lithium metal battery, research and interest are rising in lithium-free secondary batteries (or non-negative secondary batteries) that do not form a separate lithium metal layer or other negative active material layer on the negative collector but form the negative electrode with the negative electrode current collector itself.

Such lithium-free secondary batteries can achieve a higher energy density than in lithium metal batteries, and can exhibit effects such as simplifying the overall manufacturing process as the formation of a lithium metal layer is omitted.

However, the lithium-free secondary battery also has problems due to the growth of the lithium dendrite and the side reaction between the lithium metal layer and the electrolyte as the lithium metal layer is electrodeposited on the negative electrode current collector during charge and discharge process and acts as a type of negative electrode active material. In particular, the surface area in contact with the electrolyte further increases due to the growth of lithium dendrites, etc., so that the side reaction between the lithium metal layer and the electrolyte may be further increased.

For this reason, there is still a disadvantage in that an electrical short circuit may occur in a lithium-free secondary battery, or the lithium metal layer may dissipate, resulting in a large capacity loss, and the stability and life characteristics of the lithium-free secondary battery may be significantly reduced.

Conventionally, in order to solve such a problem, a method of suppressing growth of lithium dendrites or the like through surface modification of the negative electrode current collector were mainly proposed. However such a method was difficult to fundamentally suppress the side reaction between the lithium metal layer and the electrolyte, and had a limitation in improving the stability, efficiency, and life characteristics of the lithium-free secondary battery.

### [DETAILED DESCRIPTION OF THE INVENTION]

### [Technical Problem]

Therefore, it is an object of the present disclosure to provide a negative electrode for lithium-free secondary battery that suppresses side reactions between the electrolyte and the lithium metal layer electrodeposited on the negative electrode during charging and discharging and thus can improve the stability, efficiency and life characteristics of a lithium-free secondary battery.

It is an object of the present disclosure to provide a lithium-free secondary battery comprising the negative electrode which exhibit improved stability and life characteristics.

### [Technical Solution]

According to the present disclosure, there is provided a negative electrode for lithium-free secondary battery comprising:
a negative electrode current collector including a conductive metal layer including a first metal; and a second metal oxide layer formed on the conductive metal layer,
wherein the second metal oxide has a larger work function than the first metal.

Also, according to the present disclosure, there is provided a lithium-free secondary battery comprising:
the negative electrode;
a positive electrode facing the negative electrode;
an electrolyte containing a lithium salt and a non-aqueous organic solvent; and
a separator between the positive electrode and the negative electrode.

### [Advantageous Effects]

A negative electrode for lithium-free secondary battery of the present disclosure includes a metal oxide layer having a large work function, and therefore can significantly suppress side reactions between the lithium metal layer and the electrolyte even if a lithium metal layer is electrodeposited on such a metal oxide layer and the lithium metal layer comes into contact with the electrolyte.

Therefore, not only the possibility of a short circuit caused by side reactions between the lithium metal layer and the electrolyte is reduced, but the coulombic efficiency of the lithium-free secondary battery is increased and the irreversible capacity is reduced, thereby improving the life characteristics thereof.

Therefore, the present disclosure can greatly contribute to the development of lithium-free secondary batteries as next-generation secondary batteries that exhibit excellent capacity characteristics as well as improved stability and life characteristics.

### [BRIEF DESCRIPTION OF THE DRAWINGS]

FIGS. 1a and 1b respectively show images obtained by analyzing negative electrode cross sections of Examples 1 and 2 by a FIB-TEM (Focused Ion Beam Transmission Electron Microscopy).
FIG. 2 shows the results of measuring the work function (eV) by analyzing the negative electrodes of Comparative Example 1 and Examples 1 and 2 by an UPS (Ultraviolet Photoelectron Spectroscopy).
FIGS. 3a and 3b respectively show the results of CV (Cyclic Voltammetry) test for the negative electrodes of Examples 1 and 2.
FIGS. 4a and 4b respectively show elemental profiles by depth in which the negative electrodes of Examples 1 and 2 subjected to the CV (Cyclic Voltammetry) test was analyzed by X-ray Photoelectron Spectroscopy (XPS).
FIG. 5 shows the results of measuring the work function (eV) of each lithium metal layer by UPS (Ultraviolet Photoelectron Spectroscopy) after electrodepositing a lithium metal layer at a capacity of 1 mAh/cm² on the negative electrodes of Comparative Example 1 and Examples 1 and 2.
FIG. 6 shows the results of measuring the interfacial resistance through impedance analysis while electrodepositing a lithium metal layer under the application of current to half-cells including the negative electrodes of Comparative Example 1 and Examples 1 and 2.
FIG. 7 shows the results of evaluating the initial coulombic efficiency during the first cycle charge and discharge for half-cells including the negative electrodes of Comparative Example 1 and Examples 1 and 2.
FIG. 8 shows the results of evaluating a mode of change in capacity for each cycle while proceeding a charge/discharge test for the full cell including the negative electrodes of Comparative Example 1 and Examples 1 and 2.

### [DETAILED DESCRIPTION OF THE EMBODIMENTS]

Throughout the present disclosure, when a portion is referred to as "including" or "comprising" a certain component, it means that the portion can further include other components, without excluding the other components, unless otherwise stated.

Throughout the present disclosure, the terms "about or approximately" or "substantially" are intended to have meanings close to numerical values or ranges specified with an allowable error and intended to prevent accurate or absolute numerical values disclosed for understanding of the present invention from being illegally or unfairly used by any unconscionable third party. Throughout the present disclosure, the term "step of" does not mean "step for."

Throughout the present disclosure, the term "combinations of" included in Markush type description means mixture or combinations of one or more components described in Markush type and thereby means that the disclosure includes one or more selected from the components.

Further, through the present disclosure, the term "lithium-free secondary battery" may refer to a secondary battery in which, in the state before charge and discharge, for example, in the state right after manufacturing, a separate negative electrode active material layer, such as a lithium metal layer, a lithium alloy layer, or other carbon-containing layer does not exist on a negative electrode current collector, for example, a negative electrode current collector which includes a conductive metal layer including a first metal such as copper, and a second metal oxide layer having a larger work function. Therefore, the "lithium-free secondary battery" can be defined as a battery in which the negative electrode is made of the negative electrode current collector in the state before charge and discharge, and does not include a separate negative electrode active material layer (e.g., a lithium metal layer, etc.) on the negative electrode current collector. However, in addition to the negative electrode active material layer, it goes without saying that addition of a separate insulating layer or other functional thin film is not limited.

Further, the term "lithium-free secondary battery" may not be interpreted as limiting the presence of a lithium-containing positive electrode active material, or limiting the presence of a lithium metal layer or a lithium-containing compound grown on the negative electrode current collector along with the progress of charge/discharge.

Based on the above definitions, embodiments of the present disclosure will be described in detail. These embodiments are set forth to illustrate the present disclosure, and the scope of the present disclosure is not intended to be limited thereby. The present disclosure is only defined by the claims to be described hereinafter.

According to one embodiment of the disclosure, there is provided a negative electrode for lithium-free secondary battery comprising: a negative electrode current collector including a conductive metal layer including a first metal; and a second metal oxide layer formed on the conductive metal layer, wherein the second metal oxide has a larger work function than the first metal.

The negative electrode has a structure in which a second metal oxide layer having a larger work function than the first metal is formed on a conductive metal layer including a first metal such as copper. In this case, the work function of the metal or metal oxide may be defined as the minimum thermodynamic energy (eV) required to remove one electron from the surface of the solid metal or metal oxide, and can be measured and calculated from the results of analyzing the solid-state material by an UPS (Ultraviolet Photoelectron Spectroscopy).

In the lithium-free secondary battery including the negative electrode of the one embodiment, as the charge and discharge progress, a lithium metal layer is electrodeposited on the second metal oxide layer. The second metal oxide may form a lithium metal oxide containing an oxide of lithium and the second metal at the interphase with the lithium metal layer, for example, through the reaction of Reaction Scheme 1 below, wherein a lithium metal layer may be formed on the lithium metal oxide, or the lithium metal layer may include the lithium metal oxide.

[Reaction Scheme 1] MO₃ + xLi⁺ + x e⁻ → LiₓMO₃ (x ≤ 1.2)

It was confirmed that as the lithium metal oxide and lithium metal layer at the interphase are formed, the lithium metal layer electrodeposited on the second metal oxide layer may have a relatively large work function, particularly have a significantly larger work function than an independently formed lithium metal foil or a lithium metal layer formed directly on a conductive metal layer including a first metal such as copper. This large work function means that a large amount of energy is required to remove electrons from the lithium metal layer, and due to this large work function, side reactions between the lithium metal layer formed on the second metal oxide layer and the electrolyte can be suppressed.

Therefore, by applying the negative electrode of one embodiment, not only the possibility of short circuit due to side reactions between the lithium metal layer and electrolyte in the lithium-free secondary battery is reduced, but also the coulombic efficiency of the lithium-free secondary battery is increased and the irreversible capacity is reduced, thereby improving the life characteristics thereof.

Meanwhile, in the negative electrode for a lithium-free secondary battery according to the one embodiment, the conductive metal layer may have a thickness equivalent to that of a general negative electrode current collector, for example, a thickness of 3 to 500 µm, 5 to 100 µm, or 7 to 30 µm.

Further, the first metal forming the conductive metal layer is a metal that has relatively low reactivity and high conductivity without causing any chemical change in the battery, and can be formed by using any metal previously known to be usable as a negative electrode current collector.

Specific examples thereof include metals such as stainless steel, aluminum, nickel, titanium or copper, or copper, aluminum or stainless steel whose surface is treated with carbon, nickel, titanium, silver, or the like. This conductive metal layer can be formed in various forms such as a film, a sheet, a foil, a net, a porous body, a foaming body, and a non-woven fabric structure. However, taking into consideration the excellent conductivity and lightweight property of the negative electrode current collector and the negative electrode, the appropriate work function difference and low reactivity with the second metal oxide layer, and the like, the first metal may include copper (Cu), and more specifically, it may be made of a copper foil.

Such a conductive metal layer containing copper may have a work function of, for example, 4.53 to 5.10 eV, 4.55 to 4.90 eV, or 4.55 to 4.65 eV.

Further, a second metal oxide layer may be formed on at least one surface of the conductive metal layer. As already mentioned above, as the second metal oxide forming the second metal oxide layer has a larger work function than the first metal of the conductive metal layer, it can reduce side reactions between the lithium metal layer electrodeposited on the negative electrode and the electrolyte during the charge and discharge process of a lithium-free secondary battery.

More specifically, the second metal oxide may have a work function of 5.5 eV or more, or 5.5 to 6.5 eV, or 5.9 to 6.4 Ev, or 6.0 to 6.2 eV. Thereby, the second metal oxide layer can be well formed on the conductive metal layer with a thin thickness, and side reactions between the lithium metal layer electrodeposited on the negative electrode and the electrolyte can be effectively reduced.

In terms of the appropriate work function range and effectively suppressing side reactions between the lithium metal layer and the electrolyte, the second metal oxide may include molybdenum oxide (e.g., MoO₃) or tungsten oxide (e.g., WO₃). Among these, tungsten oxide can be used to further reduce side reactions between the lithium metal layer and the electrolyte in a lithium-free secondary battery, and further improve the life characteristics of the secondary battery.

The second metal oxide layer may have a thickness of, for example, 10 nm to 1 µm, 10 to 500 nm, or 10 to 200 nm in order to effectively suppress the side reaction and not impair the excellent conductivity and lightweight property of the negative electrode current collector.

Further, the method of forming the second metal oxide layer is not particularly limited, and the second metal oxide layer may be formed by any method of coating a metal oxide onto a metal layer. In a specific embodiment, the second metal oxide layer may be formed by thermally evaporating a second metal oxide on the conductive metal layer. This thermal evaporation can be formed to an appropriate evaporation thickness while monitoring the evaporation thickness and evaporation speed of the second metal oxide in real time using a quartz crystal microbalance (QCM).

Meanwhile, according to another embodiment of the disclosure, there is provided a lithium-free secondary battery including the negative electrode of one embodiment described above. Such a lithium-free secondary battery includes, for example, the negative electrode of one embodiment described above; a positive electrode facing the negative electrode; an electrolyte including a lithium salt and a non-aqueous organic solvent; and a separator between the positive electrode and the negative electrode.

In such a lithium-free secondary battery, the negative electrode does not include a separate negative electrode active material layer before charge and discharge. However, along with the progress of charge and discharge of the lithium-free secondary battery, lithium ions moved from the positive electrode may be electrodeposited on the second metal oxide layer of the negative electrode to form a lithium metal layer, and this lithium metal layer can act as a negative electrode active material.

During the electrodeposition of such a lithium metal layer, a lithium metal oxide may be formed at the interphase between the second metal oxide layer and the lithium metal layer through the reaction of Reaction Scheme 1 described above, and such lithium metal oxide may be a composite oxide of lithium and the second metal. In addition, during the continuous charge and discharge process of the lithium-free secondary battery, at least a portion of the lithium metal oxide may be separated into a second metal and lithium oxide (e.g., Li₂O).

During this charge and discharge process, due to the large work function of the second metal oxide layer, the lithium metal layer electrodeposited on the second metal oxide layer may have a relatively large work function. For example, it has been confirmed that the metal layer has a larger work function than an independently formed lithium metal foil (Li metal foil) or a lithium metal layer formed directly on a conductive metal layer such as copper. In a specific embodiment, for the lithium-free secondary battery of the other embodiments, for example, when the lithium metal layer is electrodeposited on the negative electrode at a capacity of 1 mAh/cm² under a current of 0.5 mA/cm², this lithium metal layer may have a work function of 2.8 eV or more, or 2.8 to 3.5 eV, or 2.81 to 3.30 eV.

As the lithium metal layer has such a large work function, side reactions with the electrolyte during the charging and discharging process of the lithium-free secondary battery can be suppressed, and the stability and lifespan characteristics of the lithium-free secondary battery can be further improved.

Moreover, a solid electrolyte interphase may be further formed on the second metal oxide layer of the negative electrode by the reaction of lithium ions and electrolyte during initial charging and discharging. This solid electrolyte interphase may contain, for example, lithium fluoride, and may suppress further side reactions with the electrolyte.

The formation of the solid electrolyte interphase can be confirmed by performing a CV (Cyclic Voltammetry) test on the secondary battery of the other embodiments, and analyzing the elemental profile by depth of the negative electrode of such a secondary battery using X-ray Photoelectron Spectroscopy (XPS). From the result of the formation of the solid electrolyte interphase on the second metal oxide layer, it can be confirmed that the second metal oxide layer does not simply act as a surface protective layer of the negative electrode current collector, but acts as an electrically active layer onto which the lithium metal layer is electrodeposited during charging and discharging.

Meanwhile, in the lithium-free secondary battery of the other embodiment, the positive electrode may include a positive electrode current collector and a positive electrode active material layer located on the positive electrode current collector.

Such a positive electrode can be manufactured by mixing an active material and a binder, and optionally, a conductive material, a filler, or the like in a solvent to prepare a positive electrode slurry composition, and coating the slurry composition onto a positive electrode current collector.

The positive electrode current collector may generally have a thickness of 3 to 500 µm. The positive electrode current collector is not particularly limited as long as it has high conductivity without causing any chemical changes in a battery, and for example, copper, stainless steel, aluminum, nickel, titanium, fired carbon, or aluminum or stainless steel whose surface is treated with carbon, nickel, titanium, silver, or the like may be used. In addition, the current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

Further, the positive electrode active material is a compound capable of reversible intercalation and deintercalation of lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤ b ≤ 0.1), or the like, and any one thereof or a compound of two or more thereof may be used.

Among these, the positive electrode active material includes a lithium metal oxide containing lithium; and two or more transition metals selected from the group consisting of nickel, manganese, cobalt, and aluminum, wherein the lithium metal oxide may contain nickel in an amount of 50 mol % or more, or 60 to 99 mol %, or 70 to 95 mol % based on the total metal content excluding lithium. Such a lithium metal oxide may be represented, for example, by the following Chemical Formula 1:

[Chemical Formula 1] LiₓNiₐCo_{b}M¹_{c}M²_{d}O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.50≤a<1.0, or 0.60≤a≤0.99, or 0.70≤a≤0.9. Further, 0<b≤0.3, 0<c≤0.3, and 0≤d≤0.1.

The lithium metal oxide containing such a high content of nickel is used as a positive electrode active material, and this is combined with the negative electrode of one embodiment, so that the output, capacity characteristics, life characteristics, etc. of the lithium-free secondary battery can be further improved.

The above-mentioned positive electrode active material may be contained in an amount of 60 to 99% by weight, or 70 to 99% by weight, or 80 to 98% by weight, based on the total weight of the positive electrode active material layer.

Meanwhile the conductive material contained in the positive electrode active material layer is a component for further improving the conductivity of the composite positive electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium-free secondary battery and further enhance output characteristics.

Typically, the conductive material may be contained in an amount of 1 to 20% by weight, or 1 to 15% by weight, or 1 to 10% by weight, based on the total weight of the positive electrode active material layer.

The binder optionally included in the positive electrode active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

The above-mentioned positive electrode can be prepared, for example, by dispersing and mixing the positive electrode active material, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, the lithium-free secondary battery of the other embodiments further includes an electrolyte containing a non-aqueous organic solvent and a lithium salt.

The lithium salt contained in the electrolyte is used as a medium for transferring ions within a secondary battery. For example, the lithium salt may include Li⁺ as a cation, and may together include an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

The concentration of the lithium salt can be appropriately changed within the normally usable range, and may be included in the electrolyte at a concentration of 0.5M to 6M, or at a concentration of 1M to 5M.

In a more specific example, the electrolyte may include the lithium salt at a relatively low concentration of 0.5M or more and less than 2M, or 0.7M to 1.5M, but may include the lithium salt at a high concentration of 2M to 6M, or 2.5M to 5.5M. By using an electrolyte containing such a high concentration of lithium salt, the output characteristics of the secondary battery can be further improved. In addition, by using an electrolyte containing a high concentration of lithium salt, the growth of lithium dendrites or the like from the lithium metal layer electrodeposited on the second metal oxide layer can be suppressed, thereby further improving the life characteristics of the lithium-free secondary battery.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent. However, in consideration of the stability of the lithium metal layer electrodeposited on the second metal oxide layer, the non-aqueous organic solvent preferably includes an ether-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphospholane-2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulfolane, or the like.

Meanwhile, the lithium-free secondary battery of other embodiments described above may further include a porous separator interposed between the positive electrode and the negative electrode.

Such a porous separator can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separator, and it may be more preferable to apply a porous glass filter (glass fiber non-woven fabric) as a separator. The separator may be an insulating thin film having high ion permeability and mechanical strength, and the pore diameter of the separator may generally range from 0.01 to 10 µm, and the thickness may generally range from 5 to 300 µm, but are not limited thereto.

In addition, in the other embodiments of the lithium-free secondary battery, the separator may be integrated with the electrolyte and interposed between the positive electrode and the negative electrode in the form of an electrolyte membrane or an electrolyte film. At this time, the electrolyte membrane or the electrolyte film may be a form containing the above-mentioned lithium salt and non-aqueous organic solvent in a polymer matrix, and as the polymer matrix, a well-known polymer-based solid electrolyte or the like may be used. In this case, the lithium-free secondary battery of the other embodiment may be a semi-solid-state battery that uses a liquid electrolyte and a solid electrolyte in combination.

Meanwhile, the lithium-free secondary battery of the other embodiment can be manufactured according to a conventional method in the art. For example, the lithium-free secondary battery can be prepared by housing an electrode assembly including a positive electrode, a negative electrode, and a separator in a case, and injecting and impregnating the above-mentioned electrolyte in the case.

Such a lithium-free secondary battery can be applied not only to a battery cell used as power sources for small-sized devices, but can also be particularly suitably used as a unit battery in a battery module, which is a power source for medium-sized and large-sized devices.

Hereinafter, preferred examples of the invention, comparative examples, and experimental examples for evaluating them will be described. However, the following examples are only a preferred embodiment of the invention, and are not intended to limit the scope of the invention.

### Comparative Example 1: Negative electrode for lithium-free secondary battery

A copper foil itself having a thickness of 10 µm was used as a negative electrode for lithium-free secondary battery of Comparative Example 1.

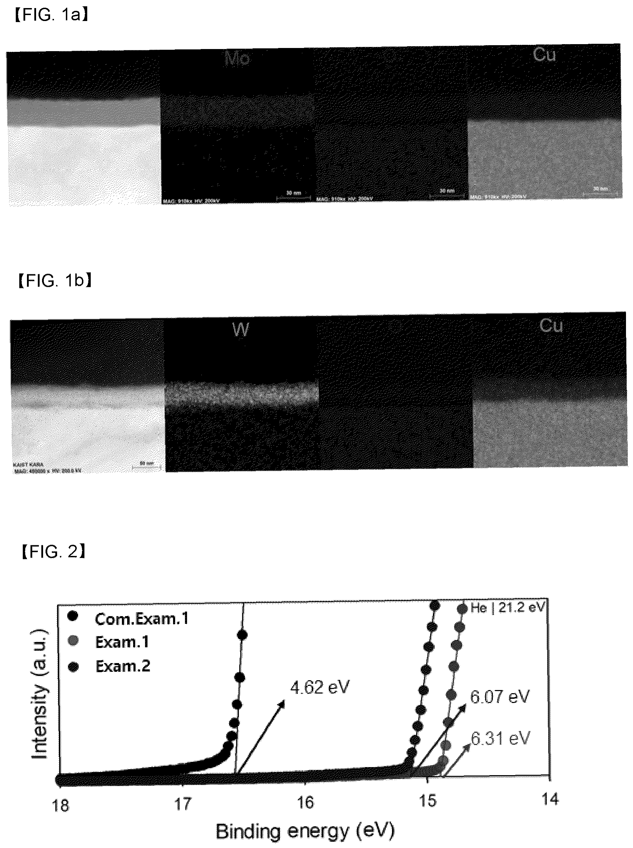

The results of measuring the work function (eV) of the negative electrode of Comparative Example 1, that is, the copper foil, by an UPS (Ultraviolet Photoelectron Spectroscopy) are shown in FIG. 2. The negative electrode for lithium-free secondary battery made of a copper foil of Comparative Example 1 was confirmed to have a work function of about 4.62 eV. The analysis of the work function was performed using an X-ray photoelectron spectroscopy (Axis-Supra by Kratos) under the irradiation of a He|X-ray source (hv=21.2 eV).

### Example 1: Manufacture of negative electrode for lithium-free secondary battery

First, MoO₃ was thermally deposited onto a copper foil having a thickness of 10 µm, while monitoring the evaporation thickness and evaporation speed in real time using a quartz crystal microbalance (QCM) to form a molybdenum oxide layer having a thickness of 20nm. This was used as the negative electrode for lithium-free secondary battery of Example 1.

The cross section of the negative electrode of Example 1 was analyzed by a FIB-TEM (Focused Ion Beam Transmission Electron Microscopy), and the image is shown in FIG. 1a. From these analysis results, it was confirmed that a molybdenum oxide layer was formed on the copper foil.

In addition, the results of analyzing the negative electrode of Example 1 by an UPS (Ultraviolet Photoelectron Spectroscopy) under the same conditions as Comparative Example 1, and measuring the work function (eV) thereof are shown in FIG. 2. It was confirmed that as the molybdenum oxide layer of Example 1 has a work function of about 6.31 eV, it has a larger work function than that of the copper foil (about 4.62 eV).

### Example 2: Manufacture of negative electrode for lithium-free secondary battery

First, WO₃ was thermally deposited on a copper foil having a thickness of 10 µm while monitoring the evaporation thickness and the evaporation speed in real time using a quartz crystal microbalance (QCM) to form a tungsten oxide layer having a thickness of 20 nm. This was used as the negative electrode for lithium-free secondary battery of Example 2.

The cross section of the negative electrode of Example 2 was analyzed by a FIB-TEM (Focused Ion Beam Transmission Electron Microscopy), and the image is shown in FIG. 1b. From these analysis results, it was confirmed that a tungsten oxide layer was formed on the copper foil.

In addition, the results of analyzing the negative electrode of Example 2 was analyzed by an UPS (Ultraviolet Photoelectron Spectroscopy) under the same conditions as Comparative Example 1 and measuring the work function (eV) thereof are shown in FIG. 2. It was confirmed that as the tungsten oxide layer of Example 2 has a work function of about 6.07 eV, it has a larger work function than that of the copper foil (about 4.62 eV).

### Experimental Example 1: Confirmation of solid electrolyte interphase

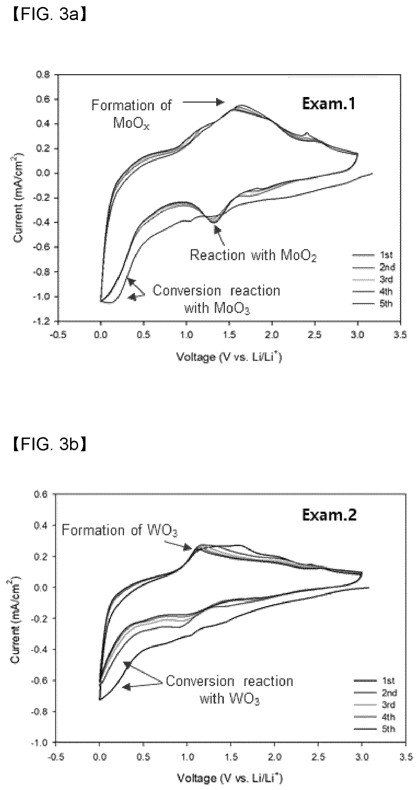

A CV (Cyclic Voltametry) test was performed for the negative electrodes for lithium-free secondary batteries of Examples 1 and 2 under the conditions of 3V-0V and 1 to 5 cycles, and such CV test results are shown in FIGS. 3a and 3b, respectively. From such CV test results, it was confirmed that as the potential was applied to the negative electrode, an electrochemical reaction occurred on the molybdenum oxide layer (Example 1) or the tungsten oxide layer (Example 2) and lithium electrodeposition was performed.

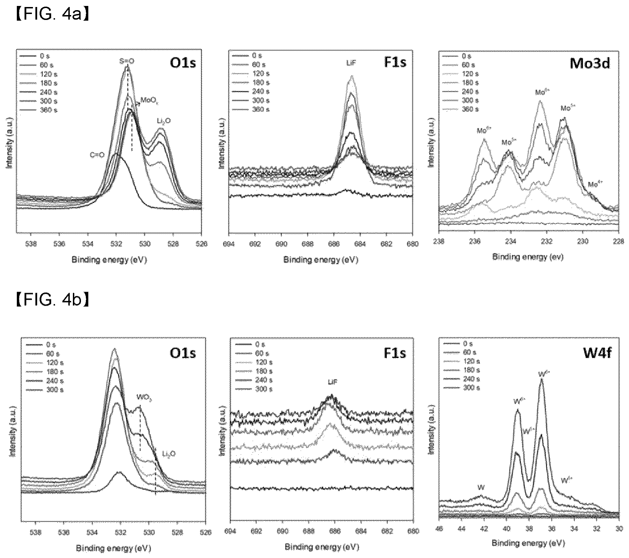

In addition, the elemental profile by depth of the negative electrodes of Examples 1 and 2 in which the CV (Cyclic Voltammetry) test was performed was analyzed by an X-ray Photoelectron Spectroscopy (XPS), and the analysis results are shown in FIGS. 4a and 4b, respectively. From such analysis results, it was confirmed that a solid electrolyte interphase was formed on the molybdenum oxide layer (Example 1) or the tungsten oxide layer (Example 2).

From the above, it was confirmed that in the negative electrode of Examples 1 and 2, the molybdenum oxide layer (Example 1) or the tungsten oxide layer (Example 2) does not act as a surface protective layer of the negative electrode current collector, but as an electrically active layer where electrodeposition of the lithium metal layer is performed during charging and discharging of the lithium-free secondary battery.

### Experimental Example 2: Measurement of work function after electrodeposition of lithium metal layer

A half-cell was manufactured using the negative electrodes of Examples or Comparative Examples as one electrode and using a lithium foil of 150 µm as the other electrode. This half-cell was manufactured to include a porous polypropylene separator interposed between the two electrodes, and an electrolyte in which the lithium salt of LiFSI was dissolved in dimethoxyethane (DME) at a concentration of 4M.

While charging and discharging the half-cell at a capacity of 1 mAh/cm² under the application of a current of 0.5 mA/cm², a lithium metal layer was electrodeposited on the negative electrode. After electrodeposition of such lithium metal, the half-cell was disassembled in a glove box filled with argon gas to measure the work function of the negative electrode on which the lithium metal layer was electrodeposited.

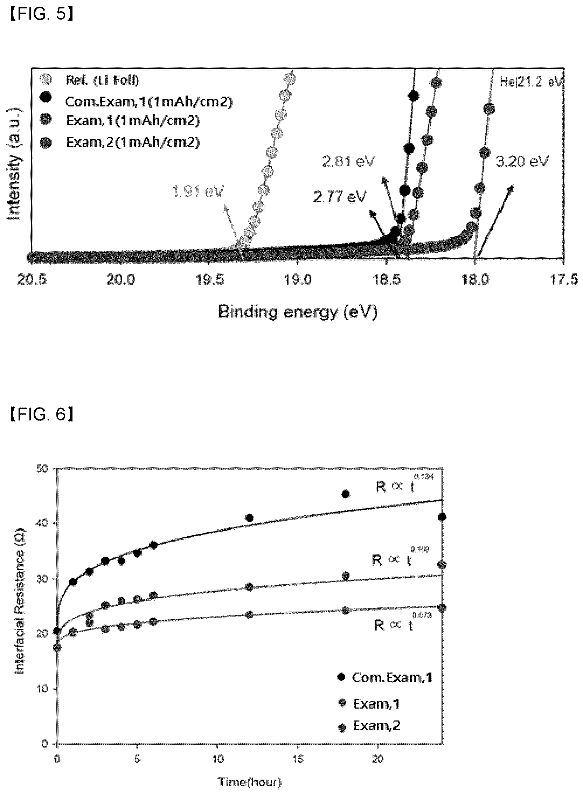

Measurement of the work function was performed by analyzing each negative electrode by an UPS (Ultraviolet Photoelectron Spectroscopy) in the same manner as in Examples and Comparative Examples, and the measurement results of this work function are shown in FIG. 5.

Referring to FIG. 5, it was confirmed that the work function of the lithium foil itself (Ref.) has a small value of 1.91 eV, and the lithium metal layer electrodeposited on the negative electrode (copper foil) of Comparative Example 1 also has a relatively low work function of 2.77 eV, whereas the negative electrodes of Examples 1 and 2, especially the lithium metal layer electrodeposited on the molybdenum oxide layer or the tungsten oxide layer, have high work functions of 2.81 eV and 3.20 eV. This is expected to be due to the presence of lithium metal oxide formed at the interphase between the lithium metal layer and the molybdenum oxide layer or tungsten oxide layer.

From this high work function, it was predicted that in the lithium-free secondary battery including the negative electrode of Examples, side reactions between the lithium metal layer electrodeposited on the negative electrode and the electrolyte would be suppressed.

### Experimental Example 3: Measurement of corrosiveness and interfacial resistance after electrodeposition of lithium metal layer

Each half-cell manufactured in Experimental Example 2 was charged and discharged at a capacity of 4 mAh/cm² under the application of a current of 0.25 mA/cm², and impedance analysis was performed while electrodepositing a lithium metal layer on the negative electrode. Impedance analysis was performed by the constant voltage EIS (Potentiostatic. EIS, PEIS) method under the conditions of a temperature of 25°C, a frequency of 0.1 to 1,000,000 Hz, and 10 mV.

This impedance analysis was performed for about 24 hours, the interfacial resistance over time was measured, and the measurement results are shown in FIG. 6.

Referring to FIG. 6, it was confirmed that in the half-cell containing the negative electrodes of Examples 1 and 2, the degree of increase in interfacial resistance over time was very low compared to Comparative Example 1. This interfacial resistance is the resistance caused by the coating film formed by the side reaction between the lithium metal layer and the electrolyte and the corrosion of the lithium metal layer, and it was confirmed that in Examples 1 and 2, side reactions between the lithium metal layer and the electrolyte and corrosion of the lithium metal layer were greatly reduced compared to Comparative Example 1.

### Experimental Example 4: Evaluation of initial coulombic efficiency of half-cell

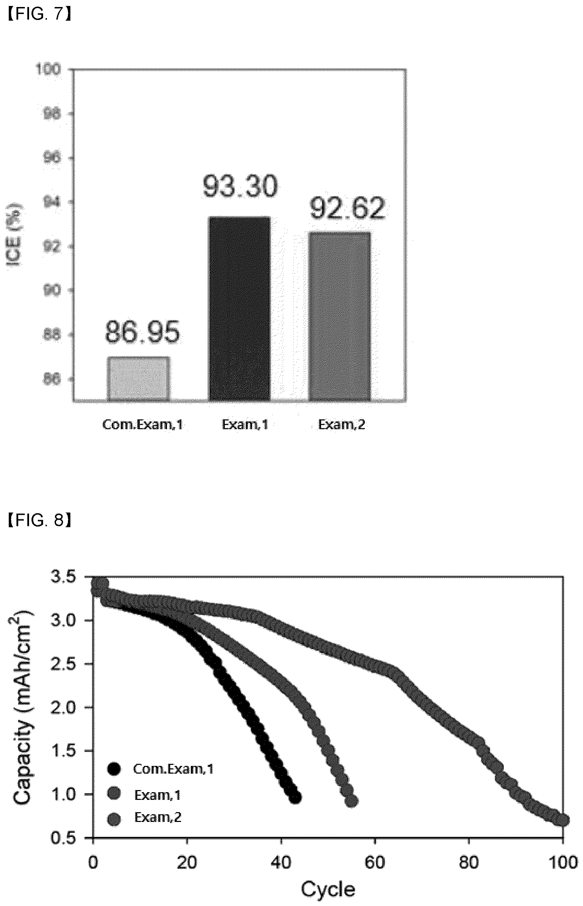

For each half-cell manufactured in Experimental Example 2 using the negative electrodes of Examples and Comparative Examples, the coulombic efficiency for each cycle was evaluated, and the evaluation results of the initial coulombic efficiency in the first cycle are compared and shown in FIG. 7.

Referring to FIG. 7, it was confirmed that the half-cell of Examples showed greatly improved initial coulombic efficiency compared to Comparative Example.

### Experimental Example 5: Evaluation of initial coulombic efficiency of full cell

First, LiNi_{0.5}CO_{0.2}Mn_{0.3}O₂ was used as the positive electrode active material, carbon black was used as a conductive material, and PVDF polymer was used as a binder. The positive electrode active material: conductive material: binder were mixed at a weight ratio of 90:5:5 in N-methylpyrrolidone solvent to prepare a slurry composition. This was coated onto an aluminum current collector, and then dried and rolled in a vacuum oven at 110°C to manufacture a positive electrode.

A porous polypropylene separator was interposed between the positive electrode and the negative electrode manufactured in Examples or Comparative Examples to prepare an electrode assembly, which was then located inside the case, and an electrolyte in which the lithium salt of LiFSI was dissolved in dimethoxyethane (DME) at a concentration of 4M was injected to manufacture a full cell of a lithium-free secondary battery (electrolyte/positive electrode ratio: 2.15g/Ah).

Aa charge and discharge test was performed for the lithium-free secondary battery by charging up to 4.35V under CC mode and 0.2C at 25°C and discharging up to 3.0V at a constant current of 1.0C. While performing a charge and discharge test for 100 cycles, the capacity retention rate for each cycle was measured and the measurement results are shown in FIG. 8.

Referring to FIG. 8, it was confirmed that Examples 1 and 2 exhibited superior capacity retention rate for each cycle and life characteristics compared to Comparative Example 1. This appears to be due to the fact that side reactions between the lithium metal layer and the electrolyte are suppressed in Examples, thereby delaying deterioration of capacity.

## Claims

1. A negative electrode for lithium-free secondary battery comprising:
a negative electrode current collector including a conductive metal layer including a first metal; and a second metal oxide layer formed on a conductive metal layer,
wherein the second metal oxide has a larger work function than the first metal.

2. The negative electrode for lithium-free secondary battery according to claim 1, wherein the first metal includes copper (Cu), and the second metal oxide has a work function of 5.5 eV or more.

3. The negative electrode for lithium-free secondary battery according to claim 1, wherein the second metal oxide includes molybdenum oxide or tungsten oxide.

4. The negative electrode for lithium-free secondary battery according to claim 1, wherein the second metal oxide layer has a thickness of 10 nm to 1 µm.

5. The negative electrode for lithium-free secondary battery according to claim 1, wherein the second metal oxide layer is formed by thermal evaporation of the second metal oxide on the conductive metal layer.

6. A lithium-free secondary battery comprising:
the negative electrode of any one of claims 1 to 5;
a positive electrode facing the negative electrode;
an electrolyte containing a lithium salt and a non-aqueous organic solvent; and
a separator between the positive electrode and the negative electrode.

7. The lithium-free secondary battery according to claim 6, further comprising a lithium metal layer electrodeposited on the second metal oxide layer of the negative electrode according to the charging/discharging of the lithium-free secondary battery.

8. The lithium-free secondary battery according to claim 7, wherein the lithium metal layer has a work function of 2.8 eV or more when electrodeposited at a capacity of 1 mAh/cm².

9. The lithium-free secondary battery according to claim 7, wherein the lithium metal layer further includes a lithium metal oxide formed at the interphase with the second metal oxide layer, and
the lithium metal oxide includes an oxide of lithium and the second metal.

10. The lithium-free secondary battery according to claim 6, further comprising a solid electrolyte interphase formed on the second metal oxide layer of the negative electrode.

11. The lithium-free secondary battery according to claim 6, wherein the positive electrode includes a lithium metal oxide containing a lithium; and two or more metals selected from the group consisting of nickel, manganese, cobalt, and aluminum, and
the lithium metal oxide contains 50 mol% or more of nickel based on the total metal content excluding lithium.

12. The lithium-free secondary battery according to claim 6, wherein the lithium salt is contained in the electrolyte at a concentration of 0.5M to 6M.

13. The lithium-free secondary battery according to claim 6, wherein the non-aqueous organic solvent includes at least one selected from the group consisting of a carbonate-based solvent, an ether-based solvent, a nitrile-based solvent, a phosphate-based solvent, and a sulfone-based solvent.
